# EUROPEAN PATENT APPLICATION

(11) **EP 4 842 023 A1**
(43) Date of publication of application: **18.11.2026**
(21) Application number: 26176029.2
(22) Date of filing: 01.05.2026
(51) Int. Cl.: H04W 4/80, H04W 28/02, H04W 36/08, H04W 36/22

(54) **PRIVACY-PRESERVING NETWORK QUALITY SHARING SYSTEM FOR CELLULAR CONGESTION AVOIDANCE**

(30) Priority: 15.05.2025 US 202563806132 P; 24.04.2026 US 202619657730
(71) Applicant: Apple Inc., Cupertino, CA 95014 (US)
(72) Inventor: EKICI, Ozgur, Cupertino, 95014 (US); CHANG, Chia Jui Gary, Cupertino, 95014 (US); BRIGGS, Elliot S., Cupertino, 95014 (US); FAHEEM, Faraz, Cupertino, 95014 (US); CILI, Gencer, Cupertino, 95014 (US); JEYAKUMAR, Kannan, Cupertino, 95014 (US); AMBATI, Rajesh, Cupertino, 95014 (US); SANE, Sachin J., Cupertino, 95014 (US); ABDULLAH, Samina Y., Cupertino, 95014 (US)
(74) Representative: Zacco Denmark A/S

(57) **Abstract**

Methods and apparatuses for privacy-preserving network quality sharing through limited Bluetooth advertising to avoid cellular congestion. Responsive to detecting multiple concurrent conditions, one or more components of a congested wireless device trigger transmission of a help request via one or more Bluetooth connections. The multiple concurrent conditions include at least network congestion on a currently-connected cell tower and a predetermined period of time remaining in a current Bluetooth address rotation. One or more components of the congested wireless device also obtain cellular performance information received from multiple other wireless devices via the one or more Bluetooth connections. One or more components of the congested wireless device further select one of multiple nearby cell towers based on the cellular performance information. One or more components of the congested wireless device further trigger a cell change to the selected cell tower.

## Description

### FIELD

The described implementations set forth techniques for privacy-preserving network quality sharing through limited Bluetooth advertising to avoid cellular congestion.

### BACKGROUND

Wireless devices experience cellular network congestion in high-density locations such as subways stations and sport venues, considerably impacting user experience. Upon detecting network congestion on its currently-connected cell tower, a wireless device may trigger a cell change to a nearby cell tower. However, when the wireless device is unaware of the network performance of nearby cell towers, the wireless device can trigger a cell change to a nearby cell tower that is also experiencing network congestion. A significant percent of cell switch attempts without a priori knowledge of nearby cell tower statuses fail to improve network performance. Network congestion typically affects multiple wireless devices in close range, creating clusters of wireless devices experiencing similar connectivity problems. Thus, to enable congested wireless devices to identify uncongested nearby cell towers for connection, there exists a need for mechanisms to share cellular performance data over short ranges.

### Summary

This application sets forth techniques for privacy-preserving network quality sharing through limited Bluetooth advertising to avoid cellular congestion. Responsive to detecting multiple concurrent conditions, one or more components of a congested wireless device can trigger transmission of a help request via one or more Bluetooth connections. In addition to network congestion on a currently-connected cell tower, the multiple concurrent conditions can include at least a predetermined period of time remaining in a current Bluetooth address rotation, the congested wireless device being communicable coupled to at least a predetermined quantity of the other wireless devices via the one or more Bluetooth connections, a daily time limit, a lack of a current Wi-Fi connection, an active state of an application processor of the congested wireless device, or a combination thereof. In some implementations, triggering the transmission of the help request includes triggering a Bluetooth component of the congested wireless device to transmit Bluetooth advertising packets for a predetermined period of time (e.g., 5 seconds). In some implementations, the Bluetooth advertising packets are non-connectable and non-scannable Bluetooth advertising packets.

One or more components of the congested wireless device can obtain cellular performance information received from a multiple other wireless devices via one or more Bluetooth connections. The cellular performance information can include multiple cellular performance reports. For example, the cellular performance information can include a cellular performance report for each of the multiple other wireless devices. In some implementations, a cellular performance report can include, among other things, one or more identifiers of a cell tower, a cellular network status indicator, a cellular network technology indicator, an identifier of a mobile network operator associated with a cell tower, and frequency information associated with a cell tower. One or more components of the congested wireless device can further select one of multiple nearby cell towers based on the cellular performance information and trigger a cell change to the selected cell tower.

In some implementations, responsive to detecting a help request received from another wireless device via one or more Bluetooth connections, one or more components of a wireless device can trigger transmission of a cellular performance report via the one or more Bluetooth connections. In some implementations, one or more components of the wireless device can trigger transmission of a self-generated cellular performance report. In some implementations, one or more components of the wireless device can trigger re-transmission of a cellular performance report received from another wireless device.

Other aspects and advantages of the invention will become apparent from the following detailed description taken in conjunction with the accompanying drawings which illustrate, by way of example, the principles of the described embodiments.

This Summary is provided merely for purposes of summarizing some example embodiments so as to provide a basic understanding of some aspects of the subject matter described herein. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

The disclosure will be readily understood by the following detailed description in conjunction with the accompanying drawings, wherein like reference numerals designate like structural elements.
FIG. 1 is a block diagram of an example of a system configured to implement the various techniques described herein, according to some implementations.
FIG. 2 is a block diagram of an example of a wireless device, according to some implementations.
FIG. 3 is diagram of an example of a client device experiencing network congestion on a currently-connected base station, according to some implementations.
FIG. 4 is diagram of an example a client device and multiple helper devices coupled to various base stations, according to some implementations.
FIG. 5 is a timing diagram of an example of sharing cellular performance reports via Bluetooth advertising packets, according to some implementations.
FIG. 6 is a table of an example of a Bluetooth frame structure of a Bluetooth advertising packet payload for requesting and sharing cellular performance information, according to some implementations.
FIG. 7 is a flow diagram of an example of a method for triggering transmission of Bluetooth advertising packets requesting cellular performance information, according to some implementations.
FIG. 8 is a diagram of an example of selecting a cellular performance report to broadcast using a privacy parameter, according to some implementations.
FIG. 9 is a timeline of an example of helper devices transmitting randomized cellular performance reports at different advertising intervals, according to some implementations.
FIG. 10 is a flow diagram of an example of a method for network quality sharing via Bluetooth to avoid cellular congestion, according to some implementations.
FIG. 11 is a block diagram of an example of a computing device, according to some implementations.

### DETAILED DESCRIPTION

Representative applications of methods and apparatus according to the present application are described in this section. These examples are being provided solely to add context and aid in the understanding of the described embodiments. It will thus be apparent to one skilled in the art that the described embodiments may be practiced without some or all of these specific details. In other instances, well known process steps have not been described in detail in order to avoid unnecessarily obscuring the described embodiments. Other applications are possible, such that the following examples should not be taken as limiting.

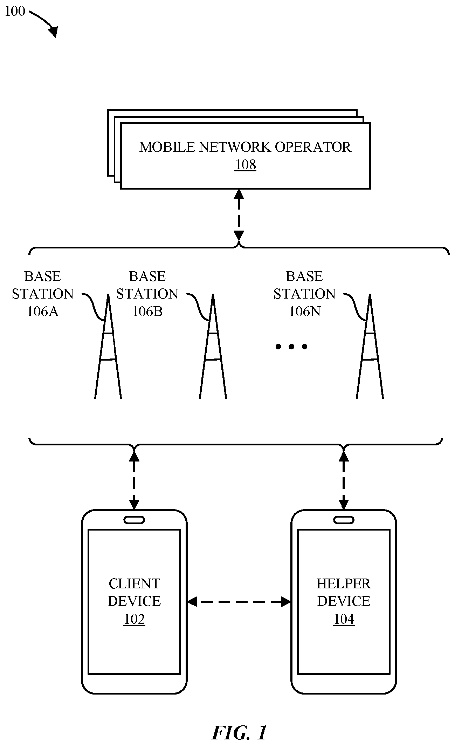

These and other implementations are discussed below with reference to FIGS. 1 through 11; however, those skilled in the art will readily appreciate that the detailed description given herein with respect to these figures is for explanatory purposes only and should not be construed as limiting.

FIG. 1 is a block diagram of an example of a system 100 for communication in accordance with some implementations of the present disclosure. The system 100 illustrated in FIG. 1 includes a client device 102, a helper device 104, multiple base stations 106A through 106N, and one or more mobile network operators (MNOs) 108. The methods described herein may be used with systems having more components, fewer components, or different components in different configurations than the system 100 illustrated in FIG. 1. For example, the system 100 may include more wireless devices than the two devices illustrated in FIG. 1.

The client device 102 and the helper device 104 can each be referred to as a wireless device, a mobile wireless device, a cellular wireless device, a wireless communication device, a mobile device, a user equipment (UE), a device, a primary wireless device, a secondary wireless device, an accessory wireless device, a cellular-capable wearable device, and the like. The client device 102 and the helper device 104 can represent a mobile computing device (e.g., a phone, a tablet, a peripheral device, etc.). The client device 102 and the helper device 104 can communicate with each via a cellular connection through one or more of the base stations 106A through 106N. Further, when in close range to each other (e.g., within 30 feet), the client device 102 and the helper device 104 can communicate with each other via a Bluetooth connection.

The base stations 106A through 106N can represent cellular radio access network (RAN) entities including fourth generation (4G) Long Term Evolution (LTE) evolved NodeBs (eNodeBs or eNBs), fifth generation (5G) NodeBs (gNodeBs or gNBs), and/or sixth generation (6G) NodeBs that are configured to communicate with the client device 102 and the helper device 104. Each of the base stations 106A through 106N can also be referred to as a network device or a cell tower. Each of the base stations 106A through 106N can be a single entity, quasi-collocated entities, or separated among multiple units (e.g., central units (CUs), distributed units (DUs), remote units (RUs), etc.).

The base stations 106A through 106N are managed by the MNOs 108. The MNOs 108 can represent different wireless service providers that provide specific services (e.g., voice, data, video, messaging, etc.) to which users of the client device 102 and the helper device 104 can subscribe to access the services via the devices. Applications resident on the client device 102 and the helper device 104 can advantageously access services of a cellular wireless network provided by a wireless service provider using 4G LTE connections, 5G connections, and/or 6G connections (when available) via one or more of the base stations 106A through 106N.

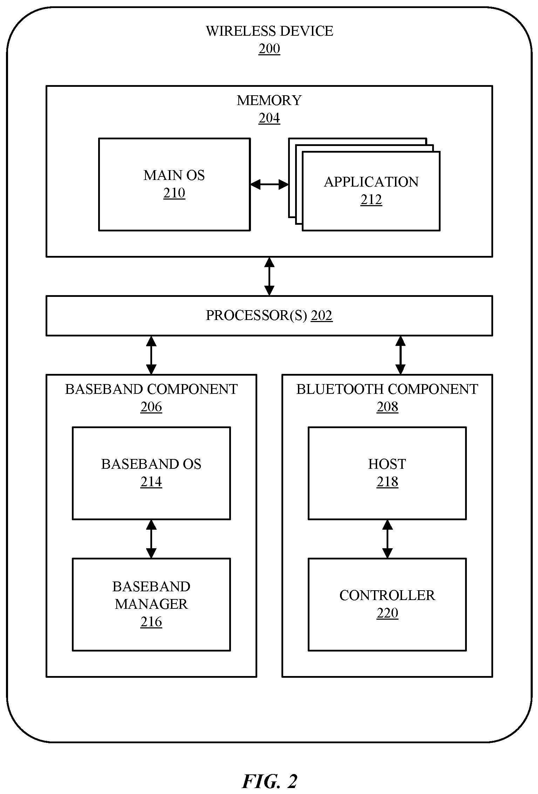

FIG. 2 is a block diagram of an example of a wireless device 200. The wireless device 200 illustrated in FIG. 2 includes one or more processors 202, a memory 204, a baseband component 206, and a Bluetooth component 208. In some implementations, the client device 102 and the helper device 104 include the same components as the wireless device 200 illustrated in FIG. 2. Alternatively, the client device 102 and the helper device 104 can include more components, fewer components, or different components in different configurations than the wireless device 200 illustrated in FIG. 2. Although depicted as distinct blocks, the various components of the wireless device 200 (e.g., the one or more processors 202, the memory 204, the baseband component 206, etc.) can be used separately, arranged, or combined in any number of configurations.

The one or more processors 202 can include an application processor, one or more wireless processors, such as a cellular baseband component, a wireless local area network processor, a wireless personal area network processor, a near-field communication processor, one or more system-level application processors, etc. The baseband component 206 provides for transmission and reception of cellular wireless radio frequency (RF) signals. The Bluetooth component 208 provides for transmission and reception of Bluetooth wireless RF signals. The components of the wireless device 200 work together to enable the wireless device 200 to provide useful features to a user of the wireless device 200, such as cellular wireless network access, non-cellular wireless network access, localized computing, location-based services, Internet connectivity, etc.

The one or more processors 202, in conjunction with the memory 204, can implement a main operating system (OS) 210 that is configured to execute applications 212 (e.g., native OS applications, user applications, etc.). The one or more processors 202 can include applications processing circuitry and/or baseband processing circuitry and, in some implementations, wireless communications control circuitry. The applications processing circuitry can monitor application requirements and usage to determine recommendations about communication connection properties, such as bandwidth and/or latency, and provide information to the communications control circuitry to determine suitable wireless connections for use by particular applications. The communications control circuitry can process information from the applications processing circuitry as well as from additional circuitry, such as the baseband component 206, the Bluetooth component 208, and other sensors (not shown) to determine states of components of the wireless device 200, e.g., reduced power modes, as well as of the wireless device 200 as a whole, e.g., mobility states, activity/inactivity states, etc.

The baseband component 206 illustrated in FIG. 2 includes a baseband OS 214 that is configured to manage hardware resources of the baseband component 206 (e.g., a processor, a memory, different radio components, etc.). The baseband component 206 (or a portion thereof) can also be referred to as a wireless baseband component, a baseband wireless processor, a cellular baseband component, a cellular component, and the like. In some implementations, the baseband component 206 can implement a baseband manager 216 that is configured to manage different connections between the wireless device 200 and the MNOs 108.

The Bluetooth component 208 illustrated in FIG. 2 includes a host 218 and a controller 220. The host 218 and the controller 220 can represent a single processing unit (e.g., in very low power devices) or separate processing units. The host 218 represents one or more of the upper layers of the Bluetooth stack, such as the Logical Link Control and Adaptation Protocol (L2CAP), the Attribute Protocol (ATT), the Generic Attribute Profile (GATT), the Security Manager Protocol (SMP), and the Generic Access Profile (GAP), which are components of the different Bluetooth protocols supported by the Bluetooth component 208. The controller 220 represents one or more of the lower layers of the Bluetooth stack, such as the Physical Layer (PHY), the Link Layer (LL), and the host controller interface (HCI), which also are components of the different Bluetooth protocols supported by the Bluetooth component 208. The host 218 can communicate with the controller 220 via an HCI interface. The host 218 can provide HCI commands to the LL of the controller 220 to establish Bluetooth classic connections and Bluetooth Low Energy connections. The LL manages advertisement, scanning, and connection establishment.

The Bluetooth component of the wireless device 200 can send data to the Bluetooth component of another wireless device. For example, the controller 220 in the Bluetooth component 208 of the client device 102 may periodically broadcast Bluetooth advertising packets (including user-defined data), and the controller 220 in the Bluetooth component 208 of the helper device 104 can scan for the Bluetooth advertising packets in accordance with specific scan windows. The Bluetooth component 208 of the wireless device 200 can receive data from the Bluetooth component of another wireless device. For example, the controller 220 in the Bluetooth component 208 of the helper device 104 may periodically broadcast Bluetooth advertising packets, and the controller 220 in the Bluetooth component 208 of the client device 102 can scan for the Bluetooth advertising packets in accordance with specific scan windows.

The host 218 of the wireless device 200 can communicate with the host of another wireless device to establish a Bluetooth connection. For example, the controller 220 in the Bluetooth component 208 of the client device 102 may periodically broadcast Bluetooth advertising packets, and the controller 220 in the Bluetooth component 208 of the helper device 104 can scan for the Bluetooth advertising packets in accordance with specific scan windows. In particular, in response to a user request to connect the helper device 104 to the client device 102, the host 218 in the Bluetooth component 208 of the helper device 104 can trigger the controller 220 to initiate scanning for Bluetooth advertising packets associated with the client device 102. Further, the controller 220 in the Bluetooth component 208 of the helper device 104 may identify the client device 102 based on a Bluetooth address (BD_ADDR) of the client device 102 included in the Bluetooth advertising packets. In some implementations, the BD_ADDR of the client device 102 can be known to the helper device 104 based on a prior pairing procedure performed between the client device 102 and the helper device 104. When the controller 220 in the Bluetooth component 208 of the helper device 104 detects the Bluetooth advertising packets from the client device 102, the controller 220 can transmit a connection request to the client device 102. In response to the connection request, the Bluetooth component 208 of the client device 102 can establish a Bluetooth connection with the Bluetooth component 208 of the helper device 104. When the Bluetooth connection is established, the client device 102 may assume the role of a master device, and the helper device 104 may assume the role of a slave device. The master device can manage connections with a number of slave devices to form a Bluetooth network (commonly referred to as a "piconet"). The Bluetooth connection between the client device 102 and the helper device 104 enables low-bandwidth data transfers to be carried out at a low power cost.

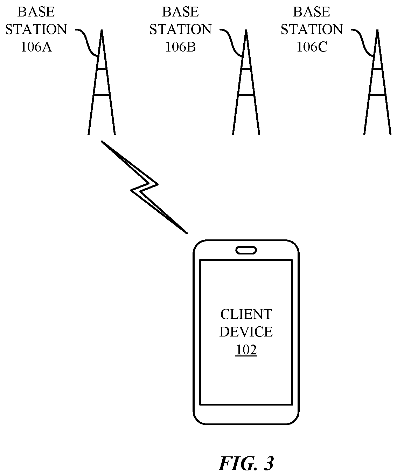

FIG. 3 is a diagram of an example of the client device 102 and three base stations 106A, 106B, and 106C. As illustrated in FIG. 3, the client device 102 is currently connected to base station 106A via a cellular connection. Upon detecting network congestion on base station 106A, one or more components of the client device 102 (e.g., processor(s) 202, memory 204, baseband component 206, etc.) can trigger a cell change to either base station 106B or base station 106C in search of improved network performance. With current congestion mitigation techniques, the client device 102 is unaware of the network performances of base station 106B and base station 106C when a cell change is triggered. Thus, when using current congestion mitigation techniques, the client device 102 may trigger a cell change to a base station experiencing similar or worse network congestion than the currently-connected base station. For example, the client device 102 may change to base station 106B, not knowing that base station 106B is experiencing network congestion until after the cell change is complete.

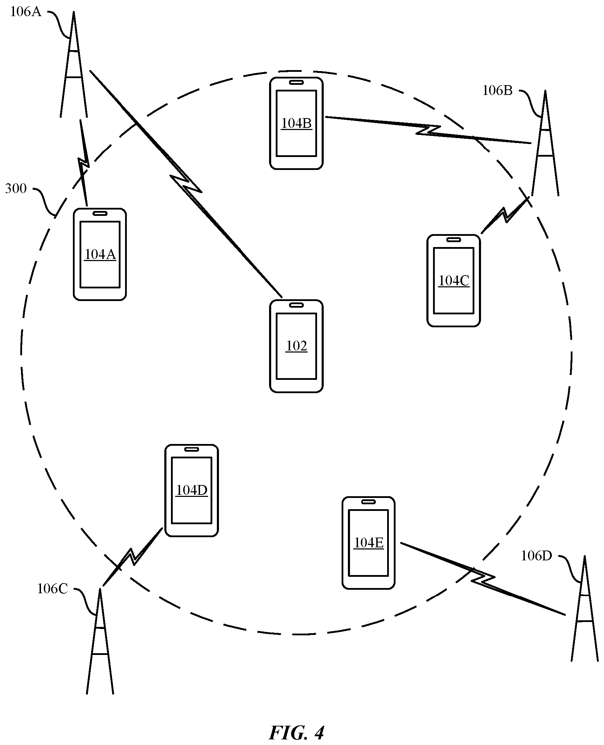

Network congestion typically affects multiple users in close range, creating clusters of devices experiencing similar connectivity problems. For example, in FIG. 4, the client device 102 and helper device 104A are cellular-connected to base station 106A and may be experiencing similar network congestion. Further, in FIG. 4, helper devices 104B and 104C are cellular-connected to base station 106B and may be experiencing network congestion. Despite the network congestion experienced by some devices, other devices may not be experiencing network congestion. For example, in FIG. 4, helper devices 104D and 104E are cellular-connected to base stations 106C and 106D, respectively, and may not be experiencing network congestion. As illustrated in FIG. 4, the helper devices 104A through 104E are located within the Bluetooth communication range 300 of the client device 102. Thus, to assist the client device 102 in determining which of the base stations 106B through 106D can provide improved network performance, the helper devices 104A through 104E can share cellular performance reports with the client device 102 via Bluetooth advertising packets as described below.

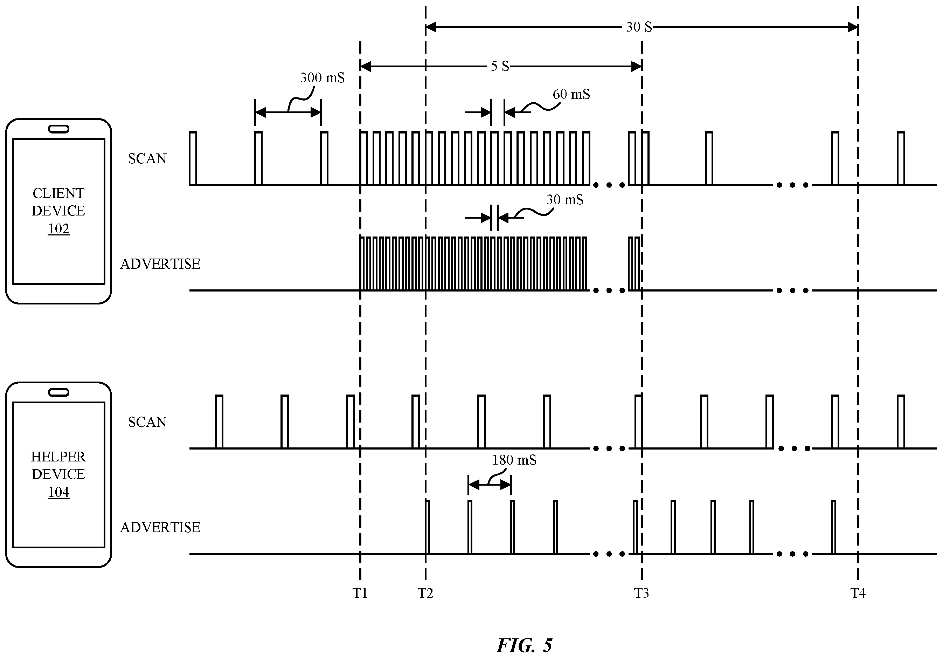

FIG. 5 is a timing diagram of an example of sharing cellular performance reports via Bluetooth advertising packets. Before time T1 in FIG. 5, the client device 102 is not experiencing network congestion on its currently-connected base station 106 and the client device 102 periodically scans for Bluetooth advertising packets. Further, before time T1, the helper device 104 periodically scans for Bluetooth advertising packets. At time T1, the client device 102 begins experiencing network congestion on its currently-connected base station 106 and starts advertising. For example, the controller 220 in the Bluetooth component 208 of the client device 102 may periodically broadcast Bluetooth advertising packets requesting cellular performance reports (one example of a "help request"). At time T1, the client device 102 also increases the scanning rate for Bluetooth advertising packets. For example, in FIG. 5, the client device 102 increases the scanning rate at time T1 from every 300 milliseconds to every 60 milliseconds. A short while after time T1, the helper device 104 receives the Bluetooth advertising packets from the client device 102. In response to receiving the Bluetooth advertising packets from the client device 102, the helper device 104 starts advertising at time T2. For example, the controller 220 in the Bluetooth component 208 of the helper device 104 may periodically broadcast Bluetooth advertising packets including cellular performance reports. A short while after time T2, the client device 102 receives the Bluetooth advertising packets from the helper device 104. The client device 102 can use the cellular performance reports included in the Bluetooth advertising packets from the helper device 104 to determine whether to trigger a cell change to the base station that the helper device 104 is currently connected to.

In some implementations, the client device 102 advertises for a predetermined period of time. For example, in FIG. 5, the client device 102 stops advertising after 5 seconds at time T3. Further, the client device 102 decreases the scanning rate for Bluetooth advertising packets at time t3. In some implementations, the helper device 104 advertises for a predetermined period of time. For example, in FIG. 5, the helper device 104 stops advertising after 30 seconds at time T4.

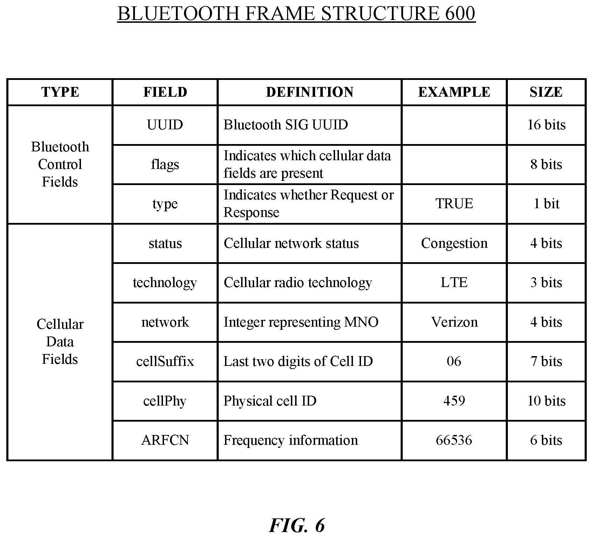

FIG. 6 is a table of an example of a Bluetooth frame structure 600 of a Bluetooth advertising packet payload for requesting and sharing cellular performance information. The Bluetooth frame structure 600 illustrated in FIG. 6 is one example of the information included in a cellular performance report. The Bluetooth frame structure 600 illustrated in FIG. 6 includes two advertisement data (AD) structures for Bluetooth control fields and seven AD structures for cellular data fields. Universally unique identifier (UUIDs) are used in Bluetooth to identify specific services, characteristics, and descriptors. UUIDs are typically a 128-bit value. However, the Bluetooth Low Energy specification allows for the use of 16-bit UUIDs as aliases for some standard 128-bit UUIDs. The UUID field included in the Bluetooth frame structure 600 of FIG. 6 includes a shortened 16-bit UUID. The flags field indicates which of the cellular data fields are present in the Bluetooth advertising packet. The type field indicates whether the Bluetooth advertising packet is a request for help or a response to a request for help. For example, when the client device 102 transmits a Bluetooth advertising packet that requests cellular performance reports, the type field can be set to TRUE (i.e., 1). Further, when the helper device 104 transmits a Bluetooth advertising packet containing a cellular performance report, the type field can be set to FALSE (i.e., 0). The status field indicates the status of the cellular network (i.e., congested or not congested). The technology field indicates the type of cellular radio technology being used (e.g., LTE, 5G New Radio Non-Standalone (NR-NSA), 5G New Radio Standalone (NR-SA), etc.). The network field identifies the MNO 108 associated with the cellular network. The cellSuffix field includes the last 2-digits of a cell ID (or cell global identity (CGI)) for a base station. CGI is a globally unique identifier that includes location and cell information for a base station. In LTE, CGI is a 32-bit value that includes a 28-bit eNodeB ID and the 4-bit Physical Cell ID. The cellPhy field identifies the physical cell ID (PCI) for a base station. PCI is a unique identifier assigned to each base station. PCI is a physical layer identifier used for synchronization and cell selection. The PCI identifies a cell at the physical layer within an eNodeB (in LTE) or gNB (in 5G). The arfcn (absolute radio-frequency channel number) field indicates frequency information for a base station.

There are four main types of Bluetooth advertising packets: (i) scannable and connectable (referred to as ADV_IN); (ii) directed connectable (referred to as ADV_DIRECT_IND); (iii) non-connectable and scannable (referred to as ADV_SCAN_IND); and (iv) non-connectable and non-scannable (referred to as ADV_NONCONN_IND). As described above, the client device 102 receives cellular performance reports from helper devices 104 via Bluetooth advertising packets. As such, the client device 102 receives cellular performance reports without having to establish a Bluetooth connection with the helper devices 104. Non-connectable and non-scannable Bluetooth advertising packets do not accept scan requests and do not accept establishing connections. In some implementations, to request cellular performance reports from helper devices 104, the Bluetooth component 208 of the client device 102 is triggered to transmit non-connectable and non-scannable Bluetooth advertising packets.

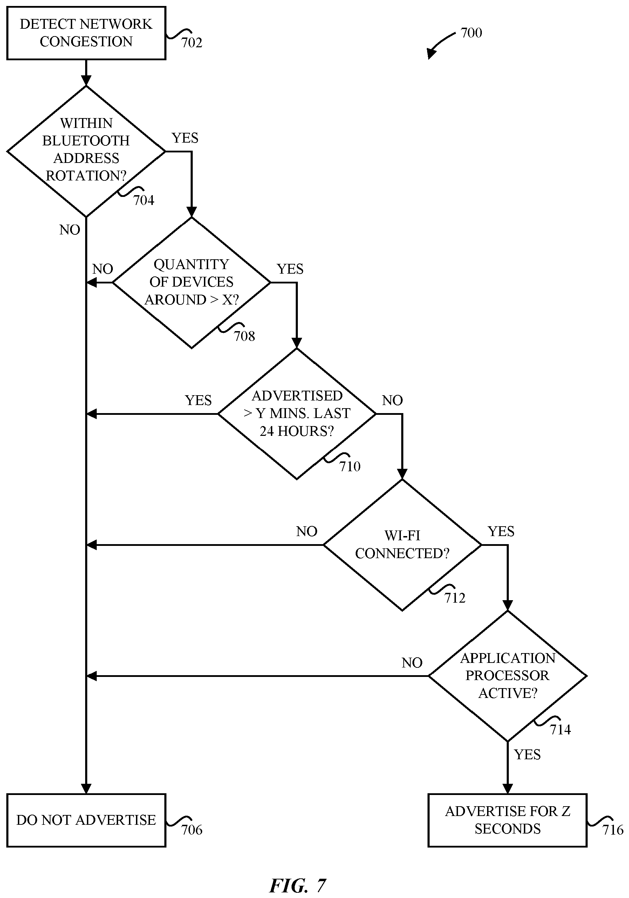

While advertising, a wireless device can be passively tracked by monitoring Bluetooth advertising packets and looking for static data in successive Bluetooth advertising packets. For example, a Bluetooth MAC address is included in every Bluetooth advertising packet. Thus, a wireless device can be passively tracked by monitoring Bluetooth advertising packets and looking for the static Bluetooth MAC address associated with the wireless device. The Bluetooth specification includes a feature known as Bluetooth address rotation (or Bluetooth LE Privacy), which causes the Bluetooth MAC address within the Bluetooth advertising packets to be replaced with a random number that changes periodically. However, even with Bluetooth address rotation, the client device 102 may still be tracked due to the static network data included in the Bluetooth frame structure 600 described above. Thus, the client device 102 can limit when Bluetooth advertising packets are transmitted to avoid traceability. FIG. 7 is a flow diagram of an example of a method 700 for triggering transmission of Bluetooth advertising packets requesting cellular performance information. For simplicity of explanation, the method 700 is depicted in FIG. 7 and described as a series of operations. However, the operations can occur in various orders and/or concurrently, and/or with other operations not presented and described herein. At block 702, the client device 102 detects network congestion. In some implementations, the client device 102 detects network congestion based on one or more symptoms that can be caused by network congestion. For example, one of more components of the client device 102 (e.g., processors(s) 202, memory 204, baseband component 206, etc.) can detect symptoms such as degraded service quality, dropped calls, slow data speed, etc.

As described above, the Bluetooth MAC address within Bluetooth advertising packets can change periodically. The client device 102 can be tracked while advertising when the Bluetooth MAC address changes. Thus, at block 704, the client device 102 determines whether the Bluetooth component 208 is within a Bluetooth address rotation. In some implementations, one or more components of the client device 102 (e.g., processors(s) 202, memory 204, baseband component 206, etc.) can determine if at least a predetermined period of time is remaining in a current Bluetooth address rotation. The predetermined period of time can be set based on the set advertising duration of the client device 102. For example, the predetermined period of time can be set to 10 seconds prior to a Bluetooth address rotation when the advertising duration of the client device 102 is 5 seconds. When the Bluetooth component 208 of the client device 102 is not within a Bluetooth address rotation, the method 700 proceeds to block 706 and the client device 102 does not advertise. Alternatively, when the Bluetooth component 208 of the client device 102 is within a Bluetooth address rotation, the method 700 proceeds to block 708.

The client device 102 is unable to receive cellular performance reports when no helper device 104 is within the Bluetooth communication range of the client device 102. Further, the client device 102 may be unable to determine which cell tower to switch to when only a limited number of helper devices 104 are within the Bluetooth communication range of the client device 102. Thus, at block 708, the client device 102 determines whether a quantity of helper devices 104 around is greater than a threshold of X. For example, one or more components of the client device 102 (e.g., processors(s) 202, memory 204, baseband component 206, etc.) can determine whether the client device 102 is communicable coupled to more than four helper devices 104 via Bluetooth. When the quantity of helper devices 104 around the client device 102 is less than or equal to the threshold of X, the method 700 proceeds to block 706 and the client device 102 does not advertise. Alternatively, when the quantity of helper devices 104 around the client device 102 is greater than the threshold of X, the method 700 proceeds to block 710.

Traceability of the client device 102 can be reduced by limiting the total advertising time each day. Thus, at block 710, the client device 102 determines whether the total amount of advertising in the last 24 hours is greater than a time limit of Y. For example, the client device 102 may be limited to advertising up to thirty minutes per day. When the total advertising time in the last 24 hours is greater than the time limit of Y, the method 700 proceeds to block 706 and the client device 102 does not advertise. Alternatively, when the total advertising time in the last 24 hours is less than or equal to the time limit of Y, the method 700 proceeds to block 712.

Several conditions may permit the client device 102 to forgo Bluetooth advertising even when the client device 102 is experiencing network congestion on the currently-connected cell tower. For example, the client device 102 may prioritize a Wi-Fi connection over a cellular connection for device communication. Thus, network congestion on the currently-connected base station of the client device 102 may not degrade performance when the client device 102 is currently connected to a Wi-Fi connection. At block 712, the client device 102 determines whether the client device 102 is connected to Wi-Fi. When the client device 102 is connected to Wi-Fi, the method 700 proceeds to block 706 and the client device 102 does not advertise. Alternatively, when the client device 102 is not connected to Wi-Fi, the method 700 proceeds to block 714.

Another condition that may permit the client device 102 to forgo Bluetooth advertising is an active state of the application processor. A cellular connection of the client device 102 may not be utilized when the application processor of the client device 102 is inactive. Thus, at block 714, the client device 102 determines whether the application processor is active. The application processor may be included in the one or more processors 202 described above in relation to FIG. 2. When the application processor is not active, the method 700 proceeds to block 706 and the client device 102 does not advertise. Alternatively, when the application processor is active, the client device 102 proceeds to block 716.

At block 716, the client device 102 triggers advertising for a period of Z seconds. For example, the Bluetooth component 208 may be triggered to advertise for a period of 5 seconds.

In some implementations, the client device 102 triggers transmission of Bluetooth advertising packets when each of the conditions described above are detected. Alternatively, or in addition, the client devices 102 may trigger transmission of Bluetooth advertising packets when any single or subset of the conditions described above are detected.

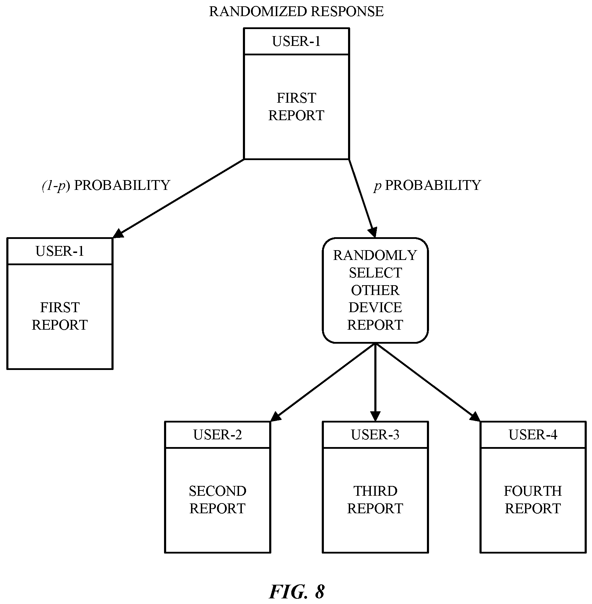

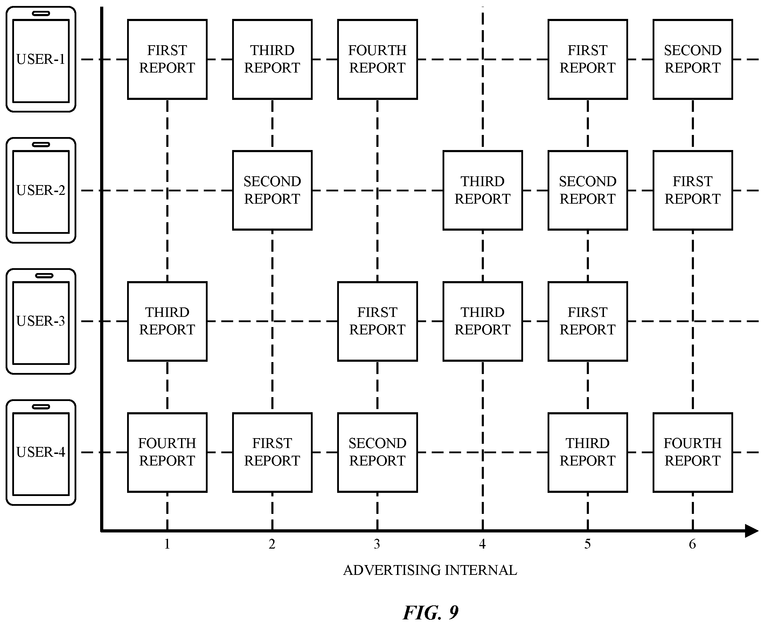

As described above, helper devices 104 may trigger transmission of Bluetooth advertising packets containing cellular performance reports in response to receiving a help request from the client device 102. In some implementations, helper devices 104 may receive and store cellular performance reports sent by one or more of the other helper devices 104. For example, while transmitting its own cellular performance report to the client device 102, the Bluetooth component 208 of a helper device 104 may also receive and store a cellular performance report from another helper device 104. A helper device 104 may be traceable when its Bluetooth component 208 is transmitting Bluetooth advertising packets. Thus, in some implementations, a helper device 104 may preserve privacy by randomly alternating between broadcasting its own cellular performance reports and relaying cellular performance reports received from other helper devices 104. For example, as illustrated in FIG. 8, a helper device 104 (identified as USER-1 in FIG. 8) employs a privacy parameter p to determine whether to transmit a first cellular performance report (i.e., its own cellular performance report) or a cellular performance report for one of multiple other helper devices 104 (identified as USER-2, USER-3, and USER-4 in FIG. 8). In some implementations, the privacy parameter *p* is set so that about 33% percent of Bluetooth advertising packets sent by a helper device 104 include cellular performance reports for that device. FIG. 9 is a timeline of an example of helper devices 104 transmitting randomized cellular performance reports at different advertising intervals. For example, in FIG. 9, a helper device 104 of USER-1 sends its own cellular performance report (i.e., the first report) during the first advertising interval and then sends a cellular performance report for USER-3 (i.e., the third report) during the second advertising interval. As a further example, in FIG. 9, the helper device 104 of USER-1 sends a cellular performance report for USER-4 (i.e., the fourth report) during the third advertising interval.

Network conditions can quickly change. Thus, a cellular performance report sent from a helper device 104 may only represent current network conditions for a limited period of time. In some implementations, the cellular performance reports are configured to expire a predetermined period of time after they are generated. For example, a cellular performance report may expire 15 seconds after the report is generated. When a helper device 104 relays a cellular performance report of another device, one or more components of the helper device 104 may ensure to select a cellular performance report that is not expired.

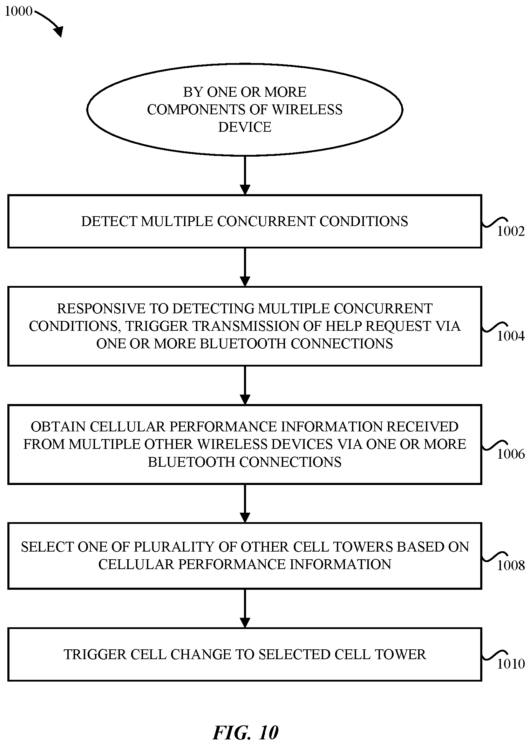

FIG. 10 is a flow diagram of an example of a method 1000 for network quality sharing via Bluetooth to avoid cellular congestion. For simplicity of explanation, the method 1000 is depicted in FIG. 10 and described as a series of operations. However, the operations can occur in various orders and/or concurrently, and/or with other operations not presented and described herein. At block 1002, multiple concurrent conditions are detected. For example, one or more components of the client device 102 (e.g., processors(s) 202, memory 204, baseband component 206, etc.) can detect network congestion on a currently-connected base station 106 and at least a predetermined period of time remaining in a current Bluetooth address rotation. In some implementations, the multiple concurrent conditions further includes the client device 102 being communicably coupled to at least a predetermined quantity of helper devices 104 via one or more Bluetooth connections, a daily time limit, a lack of a current Wi-Fi connection, an active state of an application processor of the client device 102, or a combination thereof. At block 1004, responsive to detecting the multiple concurrent conditions, transmission of a help request via one or more Bluetooth connections is triggered. For example, one or more components of the client device 102 can trigger the Bluetooth component 208 to transmit Bluetooth advertising packets for a predetermined period of time. In some embodiments, the Bluetooth advertising packets transmitted for the predetermined period of time are non-connectable and non-scannable Bluetooth advertising packets. At block 1006, cellular performance information received from multiple other wireless devices via the one or more Bluetooth connections is obtained. For example, one or more components of the client device 102 may obtain cellular performance reports included in one or more Bluetooth advertising packets that the Bluetooth component 208 of the client device 102 receives from helper devices 104. The cellular performance information may include one or more of (or each of) the cellular performance reports received by the Bluetooth component 208 of the client device 102. In some embodiments, the cellular performance information includes multiple cellular performance reports, and at least one of the multiple cellular performance reports includes one or more of the following: identifiers of the selected cell tower, a cellular network status indicator, a cellular network technology indicator, an identifier of a mobile network operator associated with the selected cell tower, and/or frequency information associated with the selected cell tower. At block 1008, one of multiple other cell towers is selected based on the cellular performance information. For example, one or more components of the client device 102 may select a new cell tower that one or more cellular performance reports included in the cellular performance information indicate is not experiencing network congestion. At block 1010, a cell change to the selected cell tower is triggered. For example, one or more components of the client device 102 may send one or more commands that cause the baseband component 206 of the client device 102 to disconnect from a currently-connected cell tower and connect to the selected cell tower.

In some embodiments, the client device 102 is a first client device, and the first client device receives a help request message from a second client device, i.e., the second client device seeks help. The first client device can detect the second help request via the one or more Bluetooth connections and responsive to detecting the second help request: i) select one of the multiple cellular performance reports included in the cellular performance information, and ii) triggering transmission of the selected cellular performance report via the one or more Bluetooth connections. In some embodiments, the first client device generates a cellular performance report associated with the first client device and, responsive to detecting a third help request from a third wireless device via the one or more Bluetooth connections, triggers transmission of the cellular performance report associated with the first client device via the one or more Bluetooth connections.

### Exemplary Embodiments

In an exemplary embodiments, one or more components of a wireless device 102 perform a method 1000 for network quality sharing via Bluetooth to avoid cellular congestion. The method 1000 can include: (i) detecting 1002 a plurality of concurrent conditions comprising network congestion on a currently-connected cell tower and at least a predetermined period of time remaining in a current Bluetooth address rotation, (ii) responsive to detecting the plurality of concurrent conditions, triggering 1004 transmission of a help request via one or more Bluetooth connections, (iii) obtaining 1006 cellular performance information received from a plurality of other wireless devices 104 via the one or more Bluetooth connections, (iv) selecting 1008 one of a plurality of other cell towers based on the cellular performance information, and (v) triggering 1010 a cell change to the selected cell tower.

In some embodiments, the plurality of concurrent conditions further comprises the wireless device 102 being communicably coupled to at least a predetermined quantity of the plurality of other wireless devices 104 via the one or more Bluetooth connections. In some embodiments, the plurality of concurrent conditions further comprises a daily time limit. In some embodiments, the plurality of concurrent conditions further comprises a lack of a current Wi-Fi connection or an active state of an application processor, e.g., a processor 202, of the wireless device 102. In some embodiments, triggering the transmission of the help request via the one or more Bluetooth connections further comprises triggering a Bluetooth component 208 of the wireless device 102 to transmit Bluetooth advertising packets for a predetermined period of time. In some embodiments, the Bluetooth advertising packets are non-connectable and non-scannable Bluetooth advertising packets. In some embodiments, the wireless device 102 is a first wireless device 102, the help request is a first help request, and the method performed by the one or more components of the wireless device 102 further includes: (i) detecting a second help request received from a second wireless device 104 via the one or more Bluetooth connections, and (ii) responsive to detecting the second help request: (a) selecting one of a plurality of cellular performance reports comprised in the cellular performance information, and (b) triggering transmission of the selected cellular performance report via the one or more Bluetooth connections. In some embodiments, the method performed by the one or more components of the wireless device 102 further includes: (i) generating a cellular performance report associated with the first wireless device 102, (ii) detecting a third help request received from a third wireless device 104 via the one or more Bluetooth connections, and (iii) responsive to detecting the third help request, triggering transmission of the cellular performance report associated with the first wireless device 102 via the one or more Bluetooth connections. In some embodiments, the cellular performance information comprises a plurality of cellular performance reports. In some embodiments at least one of the plurality of cellular performance reports comprises at least one selected from the group consisting of: (i) one or more identifiers of the selected cell tower, (ii) a cellular network status indicator, (iii) an identifier of a mobile network operator associated with the selected cell tower, and (iii) frequency information associated with the selected cell tower.

In some embodiments, an apparatus comprises memory coupled to processing circuitry, where the processing circuitry is configured to perform a method for network quality sharing via Bluetooth to avoid cellular congestion as described herein. In some embodiments, a non-transitory computer-readable storage medium stores instructions to configure one or more components of a wireless device 102 to perform a method for network quality sharing via Bluetooth to avoid cellular congestion as described herein.

### Representative Exemplary Apparatus

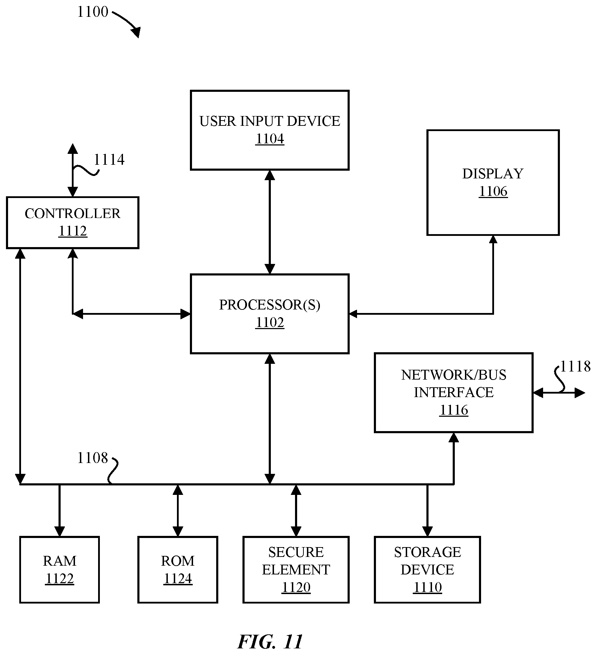

FIG. 11 is a block diagram of an example of a computing device 1100 that can be used to implement the various components and techniques described herein, according to some implementations. In particular, the detailed view of the computing device 1100 illustrates various components that can be included in the client device 102, the helper device 104, and/or the wireless device 200. As shown in FIG. 11, the computing device 1100 can include one or more processors 1102 that represent microprocessors or controllers for controlling the overall operation of the computing device 1100. In some implementations, the computing device 1100 can also include a user input device 1104 that allows a user of the computing device 1100 to interact with the computing device 1100. For example, in some implementations, the user input device 1104 can take a variety of forms, such as a button, keypad, dial, touch screen, audio input interface, visual/image capture input interface, input in the form of sensor data, etc. In some implementations, the computing device 1100 can include a display 1106 (screen display) that can be controlled by the one or more processors 1102 to display information to the user (e.g., information relating to incoming, outgoing, or active communication sessions). A data bus 1108 can facilitate data transfer between at least the one or more processors 1102, a storage device 1110, and a controller 1112. The controller 1112 can be used to interface with and control different equipment through an equipment control bus 1114. The computing device 1100 can also include a network/bus interface 1116 that couples to a data link 1118. In the case of a wireless connection, the network/bus interface 1116 can include wireless circuitry, such as a wireless transceiver and/or baseband component. The computing device 1100 can also include a secure element 1120.

The storage device 1110 can include a single disk or multiple disks (e.g., hard drives and/or solid-state drives), and includes a storage management module that manages one or more partitions within the storage device 1110. In some implementations, the storage device 1110 can include flash memory, semiconductor (solid state) memory or the like. The computing device 1100 can also include a Random Access Memory (RAM) 1122 and a Read-Only Memory (ROM) 1124. The RAM 1122 can provide volatile data storage, and stores instructions related to the operation of the computing device 1100. The ROM 1124 can store programs, utilities or processes to be executed in a non-volatile manner.

### Wireless Terminology

In accordance with various implementations described herein, the terms "wireless communication device," "wireless device," "mobile wireless device," "mobile station," and "user equipment" (UE) may be used interchangeably herein to describe one or more common consumer electronic devices that may be capable of performing procedures associated with various implementations of the disclosure. In accordance with various implementations, any one of these consumer electronic devices may relate to: a cellular phone or a smart phone, a tablet computer, a laptop computer, a notebook computer, a personal computer, a netbook computer, a media player device, an electronic book device, a MiFi^{®} device, a wearable computing device, as well as any other type of electronic computing device having wireless communication capability that can include communication via one or more wireless communication protocols such as used for communication on: a wireless wide area network (WWAN), a wireless metro area network (WMAN), a wireless local area network (WLAN), a wireless personal area network (WPAN), a near field communication (NFC), a cellular wireless network, a fourth generation (4G) Long Term Evolution (LTE), LTE Advanced (LTE-A), 5G, and/or 6G, or other present or future developed advanced cellular wireless networks.

The wireless communication device, in some implementations, can also operate as part of a wireless communication system, which can include a set of client devices, which can also be referred to as stations, client wireless devices, or client wireless communication devices, interconnected to an access point (AP), e.g., as part of a WLAN, and/or to each other, e.g., as part of a WPAN and/or an "ad hoc" wireless network. In some implementations, the client device can be any wireless communication device that is capable of communicating via a WLAN technology, e.g., in accordance with a wireless local area network communication protocol. In some implementations, the WLAN technology can include a Wi-Fi (or more generically a WLAN) wireless communication subsystem or radio, the Wi-Fi radio can implement an Institute of Electrical and Electronics Engineers (IEEE) 802.11 technology, such as one or more of: IEEE 802.11a; IEEE 802.11b; IEEE 802.11g; IEEE 802.11-2007; IEEE 802.11n; IEEE 802.11-2012; IEEE 802.11ac; or other present or future developed IEEE 802.11 technologies.

Additionally, it should be understood that the UEs described herein may be configured as multi-mode wireless devices that are also capable of communicating via different radio access technologies (RATs). In these scenarios, a multi-mode UE can be configured to prefer attachment to a 5G wireless network offering faster data rate throughput, as compared to other 4G LTE legacy networks offering lower data rate throughputs. For instance, in some implementations, a multi-mode UE may be configured to fall back to a 4G LTE or a 3G legacy network, e.g., an Evolved HighSpeed Packet Access (HSPA+) network or a Code Division Multiple Access (CDMA) 2000 Evolution-Data Only (EV-DO) network, when 5G wireless networks are otherwise unavailable.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

The various aspects, embodiments, implementations or features of the described embodiments can be used separately or in any combination. Various aspects of the described embodiments can be implemented by software, hardware or a combination of hardware and software. The described embodiments can also be embodied as computer readable code on a non-transitory computer readable medium. The non-transitory computer readable medium is any data storage device that can store data which can thereafter be read by a computer system. Examples of the non-transitory computer readable medium include read-only memory, random-access memory, CD-ROMs, HDDs, DVDs, magnetic tape, and optical data storage devices. The non-transitory computer readable medium can also be distributed over network-coupled computer systems so that the computer readable code is stored and executed in a distributed fashion.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of specific embodiments are presented for purposes of illustration and description. They are not intended to be exhaustive or to limit the described embodiments to the precise forms disclosed. It will be apparent to one of ordinary skill in the art that many modifications and variations are possible in view of the above teachings.

Exemplary methods, apparatus, and non-transitory computer-readable storage media are set out in the following items.
1. A method for network quality sharing via Bluetooth to avoid cellular congestion, the method comprising:
   by one or more components of a wireless device:
   detecting a plurality of concurrent conditions comprising network congestion on a currently-connected cell tower and at least a predetermined period of time remaining in a current Bluetooth address rotation;
   responsive to detecting the plurality of concurrent conditions, triggering transmission of a help request via one or more Bluetooth connections;
   obtaining cellular performance information received from a plurality of other wireless devices via the one or more Bluetooth connections;
   selecting one of a plurality of other cell towers based on the cellular performance information; and
   triggering a cell change to the selected cell tower.
2. The method of item 1, wherein the plurality of concurrent conditions further comprises the wireless device being communicably coupled to at least a predetermined quantity of the plurality of other wireless devices via the one or more Bluetooth connections.
3. The method of item 1, wherein the plurality of concurrent conditions further comprises a daily time limit.
4. The method of item 1, wherein the plurality of concurrent conditions further comprises a lack of a current Wi-Fi connection or an active state of an application processor of the wireless device.
5. The method of item 1, wherein triggering the transmission of the help request via the one or more Bluetooth connections further comprises:
   triggering a Bluetooth component of the wireless device to transmit Bluetooth advertising packets for a predetermined period of time.
6. The method of item 5, wherein the Bluetooth advertising packets are non-connectable and non-scannable Bluetooth advertising packets.
7. The method of item 1, wherein the wireless device is a first wireless device, wherein the help request is a first help request, and wherein the method further comprises:
   detecting a second help request received from a second wireless device via the one or more Bluetooth connections; and
   responsive to detecting the second help request:
      selecting one of a plurality of cellular performance reports comprised in the cellular performance information, and
      triggering transmission of the selected cellular performance report via the one or more Bluetooth connections.
8. The method of item 7, further comprising:
   generating a cellular performance report associated with the first wireless device;
   detecting a third help request received from a third wireless device via the one or more Bluetooth connections; and
   responsive to detecting the third help request, triggering transmission of the cellular performance report associated with the first wireless device via the one or more Bluetooth connections.
9. The method of item 1, wherein:
   the cellular performance information comprises a plurality of cellular performance reports, and
   at least one of the plurality of cellular performance reports comprises at least one selected from the group consisting of:
      one or more identifiers of the selected cell tower,
      a cellular network status indicator,
      a cellular network technology indicator,
      an identifier of a mobile network operator associated with the selected cell tower, and
      frequency information associated with the selected cell tower.
10. An apparatus comprising memory coupled to processing circuitry, the processing circuitry configured to:
   detect a plurality of concurrent conditions comprising network congestion on a currently-connected cell tower and at least a predetermined period of time remaining in a current Bluetooth address rotation;
   responsive to detecting the plurality of concurrent conditions, trigger transmission of a help request via one or more Bluetooth connections;
   obtain cellular performance information received from a plurality of wireless devices via the one or more Bluetooth connections;
   select one of a plurality of other cell towers based on the cellular performance information; and
   trigger a cell change to the selected cell tower.
11. The apparatus of item 10, wherein the plurality of concurrent conditions further comprise:
   the apparatus being communicably coupled to at least a predetermined quantity of the wireless devices via the one or more Bluetooth connections;
   a daily time limit; or
   a lack of a current Wi-Fi connection or an active state of an application processor of the apparatus.
12. The apparatus of item 10, wherein:
   to trigger the transmission of the help request via the one or more Bluetooth connections, the processing circuitry is further configured to trigger a Bluetooth component of the apparatus to transmit Bluetooth advertising packets via the one or more Bluetooth connections for a predetermined period of time; and
   the Bluetooth advertising packets are non-connectable and non-scannable Bluetooth advertising packets.
13. The apparatus of item 10, wherein the help request is a first help request, and wherein the processing circuitry is further configured to:
   detect a second help request received from a wireless device via the one or more Bluetooth connections; and
   responsive to detecting the second help request:
      select one of a plurality of cellular performance reports comprised in the cellular performance information, and
      trigger transmission of the selected cellular performance report via the one or more Bluetooth connections.
14. The apparatus of item 16, wherein the wireless device is a first wireless device, and wherein the processing circuitry is further configured to:
   generate a cellular performance report associated with the apparatus;
   detect a third help request received from a second wireless device via the one or more Bluetooth connections; and
   responsive to detecting the third help request, trigger transmission of the cellular performance report associated with the apparatus via the one or more Bluetooth connections.
15. A non-transitory computer-readable storage medium storing instructions to configure one or more components of a wireless device to:
   detect a plurality of concurrent conditions comprising network congestion on a currently-connected cell tower and at least a predetermined period of time remaining in a current Bluetooth address rotation;
   responsive to detecting the plurality of concurrent conditions, trigger transmission of a help request via one or more Bluetooth connections;
   obtain cellular performance information received from a plurality of other wireless devices via the one or more Bluetooth connections;
   select one of a plurality of other cell towers based on the cellular performance information; and
   trigger a cell change to the selected cell tower.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method for network quality sharing via Bluetooth to avoid cellular congestion, the method comprising:
by one or more components of a wireless device:
detecting a plurality of concurrent conditions comprising network congestion on a currently-connected cell tower and at least a predetermined period of time remaining in a current Bluetooth address rotation;
responsive to detecting the plurality of concurrent conditions, triggering transmission of a help request via one or more Bluetooth connections;
obtaining cellular performance information received from a plurality of other wireless devices via the one or more Bluetooth connections;
selecting one of a plurality of other cell towers based on the cellular performance information; and
triggering a cell change to the selected cell tower.

2. The method of claim 1, wherein the plurality of concurrent conditions further comprises the wireless device being communicably coupled to at least a predetermined quantity of the plurality of other wireless devices via the one or more Bluetooth connections.

3. The method of any of the preceding claims, wherein the plurality of concurrent conditions further comprises a daily time limit.

4. The method of any of the preceding claims, wherein the plurality of concurrent conditions further comprises a lack of a current Wi-Fi connection or an active state of an application processor of the wireless device.

5. The method of any of the preceding claims, wherein triggering the transmission of the help request via the one or more Bluetooth connections further comprises:
triggering a Bluetooth component of the wireless device to transmit Bluetooth advertising packets for a predetermined period of time.

6. The method of claim 5, wherein the Bluetooth advertising packets are non-connectable and non-scannable Bluetooth advertising packets.

7. The method of any of the preceding claims, wherein the wireless device is a first wireless device, wherein the help request is a first help request, and wherein the method further comprises:
detecting a second help request received from a second wireless device via the one or more Bluetooth connections; and
responsive to detecting the second help request:
selecting one of a plurality of cellular performance reports comprised in the cellular performance information, and
triggering transmission of the selected cellular performance report via the one or more Bluetooth connections.

8. The method of claim 7, further comprising:
generating a cellular performance report associated with the first wireless device;
detecting a third help request received from a third wireless device via the one or more Bluetooth connections; and
responsive to detecting the third help request, triggering transmission of the cellular performance report associated with the first wireless device via the one or more Bluetooth connections.

9. The method of any of the preceding claims, wherein:
the cellular performance information comprises a plurality of cellular performance reports, and
at least one of the plurality of cellular performance reports comprises at least one selected from the group consisting of:
one or more identifiers of the selected cell tower,
a cellular network status indicator,
a cellular network technology indicator,
an identifier of a mobile network operator associated with the selected cell tower, and
frequency information associated with the selected cell tower.

10. An apparatus comprising memory coupled to processing circuitry, the processing circuitry configured to:
detect a plurality of concurrent conditions comprising network congestion on a currently-connected cell tower and at least a predetermined period of time remaining in a current Bluetooth address rotation;
responsive to detecting the plurality of concurrent conditions, trigger transmission of a help request via one or more Bluetooth connections;
obtain cellular performance information received from a plurality of wireless devices via the one or more Bluetooth connections;
select one of a plurality of other cell towers based on the cellular performance information; and
trigger a cell change to the selected cell tower.

11. The apparatus of claim 10, wherein the plurality of concurrent conditions further comprise:
the apparatus being communicably coupled to at least a predetermined quantity of the wireless devices via the one or more Bluetooth connections;
a daily time limit; or
a lack of a current Wi-Fi connection or an active state of an application processor of the apparatus.

12. The apparatus of any of claims 10-11, wherein:
to trigger the transmission of the help request via the one or more Bluetooth connections, the processing circuitry is further configured to trigger a Bluetooth component of the apparatus to transmit Bluetooth advertising packets via the one or more Bluetooth connections for a predetermined period of time; and
the Bluetooth advertising packets are non-connectable and non-scannable Bluetooth advertising packets.

13. The apparatus of any of claims 10-12, wherein the help request is a first help request, and wherein the processing circuitry is further configured to:
detect a second help request received from a wireless device via the one or more Bluetooth connections; and
responsive to detecting the second help request:
select one of a plurality of cellular performance reports comprised in the cellular performance information, and
trigger transmission of the selected cellular performance report via the one or more Bluetooth connections.

14. The apparatus of any of claims 10-13, wherein the wireless device is a first wireless device, and wherein the processing circuitry is further configured to:
generate a cellular performance report associated with the apparatus;
detect a third help request received from a second wireless device via the one or more Bluetooth connections; and
responsive to detecting the third help request, trigger transmission of the cellular performance report associated with the apparatus via the one or more Bluetooth connections.

15. A non-transitory computer-readable storage medium storing instructions to configure one or more components of a wireless device to:
detect a plurality of concurrent conditions comprising network congestion on a currently-connected cell tower and at least a predetermined period of time remaining in a current Bluetooth address rotation;
responsive to detecting the plurality of concurrent conditions, trigger transmission of a help request via one or more Bluetooth connections;
obtain cellular performance information received from a plurality of other wireless devices via the one or more Bluetooth connections;
select one of a plurality of other cell towers based on the cellular performance information; and
trigger a cell change to the selected cell tower.
